# EUROPEAN PATENT APPLICATION

(11) **EP 2 202 280 A1**
(43) Date of publication of application: **30.06.2010**
(21) Application number: 08020394.6
(22) Date of filing: 24.11.2008
(51) Int. Cl.: C09D 5/08, C23C 18/12

(54) **Corrosion inhibting coatings controllable by electromagnetic irradiation and methods for corrosion inhibition using the same**

(71) Applicant: Max-Planck-Gesellschaft zur Förderung der Wissenschaften e.V., 80539 München (DE)
(72) Inventor: Skorb, Katsiaryna, 14476 Golm (DE); Shchukin, Dmitry, 13349 Berlin (DE); Skirtach, Andre, 14532 Kleinmachnow (DE); Möhwald, Helmuth, 55411 Bingen (DE)
(74) Representative: Katzameyer, Michael

(57) **Abstract**

The invention provides a corrosion inhibiting coating comprising as a first layer a primer layer having incorporated therein corrosion inhibitor-loaded containers which are capable to release a corrosion inhibitor in response to electromagnetic irradiation and as a second layer a container-free protective top layer which, if intact, prevents the spontaneous opening of said containers in the primer layer induced by electromagnetic irradiation, and which coating is capable to release an inhibitor in response to electromagnetic irradiation if the protective top layer contains defective areas which enable direct exposition of the containers to the electromagnetic irradiation.

In a preferred embodiment, the containers have a core of porous photoactive particles such as TiO₂ in the anatase modification, the inhibitor is present in the pores of said particles and the particles are enclosed in a polymer or polyelectrolyte shell.

Also provided by the present invention is a method for providing controllable release of an corrosion inhibitor using said coating.

## Description

### Background

Corrosion of metals is one of the main destruction processes of metallic structures leading to huge economic losses. Commonly, polymer coating systems are applied on the metal surface which provide a dense barrier for the corrosive species in order to protect metal structures from the corrosion attack. When the barrier is damaged and the corrosive agents penetrate to the metal surface the coating system is not able to stop the corrosion process. The most widely used and effective anticorrosion coatings are those based on using hexavalent chromium (C.B. Breslin, G. Treacy, W.M. Carroll, Corros. Sci. 1994, 36, 1143). However, the use of Cr VI is becoming increasingly restrictive due to its characteristic as human carcinogen and substantial contribution to environmental pollution. Organically modified silicates are hybrid organic-inorganic materials formed through hydrolysis and condensation of organically modified silanes with traditional alkoxide precursors and could be used as an alternative to the traditional anticorrosion coatings based on Cr VI (C.J. Lund, P.D. Murphy, M.V. Plat, Silane and Other Coupl. Agents. 1992, 1, 423; S.H. Cho, H.M. Andersson, S.R. White, N.R. Sottos, P.V. Braun, Adv. Mater. 2006, 18 997; K. Bonnel, C. Le Pen, N. Peabeare, Electroch. Act. 1999, 44, 4259).

Sol-gel coatings have been extensively investigated for their corrosion protection of aluminium alloy substrates (D.G. Shchukin, M. Zheludkevich, K. Yasakau, S. Lamaka, M.G.S. Ferreira, H. Möhwald. Adv. Mater. 2006, 18, 1672; D.G. Shchukin, M. Zheludkevich, H. Möhwald, J. Mater. Chem. 2006, 16, 4561; D.G. Shchukin, S.V. Lamaka, K.A. Yasakau, M.L. Zheludkevich, M.G.S. Ferreira, H. Möhwald, J. Phys. Chem. C. 2008, 112, 958). These coatings exhibit increased flexibility and thickness in comparison with their inorganic counterparts. In general, these sol-gel-derived coatings have been found to provide good corrosion resistance for metal substrates because of their barrier properties, tenacious adhesion to metal substrates, chemical inertness, versatility in coating formulations, and ease of application under ambient temperature conditions. The greatest disadvantage of individual sol-gel hybrid films is the absence of healing the corrosion centers after appearance. This is possible by using the corrosion inhibitor directly incorporated into the hybrid sol-gel matrix (A.R. Sarkar, P.K. Datta, M. Sarkar, Talanta. 1996, 43, 1857; C. Melander, W. Tüting, M. Bengtsson, Th. Laurell, P. Mischnick, Lo Gorton, Starch/Stärke 2006, 58, 231).

Another approach to prevent corrosion propagation on metal surfaces is its suppression using physical-chemical reactions of corrosion to initiate inhibitor activity. The corrosion process itself can be a stimulus triggering the release of a healing component (e.g., inhibitors) from the coating. A few coatings with so-called self-healing effect were explored up to now (D.G. Shchukin, S.V. Lamaka, K.A. Yasakau, M.L. Zheludkevich, M. G. S. Ferreira, H. Möhwald, J. Phys. Chem. C. 2008, 112, 958). Ion-exchange resins can release inhibitors in response to reactions with corrosive ions (M.L. Zheludkevich, R. Serra, M.F. Montemor, M.G.S. Ferreira, Electrochem. Commun. 2005, 7, 836). Monomer-filled capsules introduced into polymer coatings are capable of healing the defects in the coating by releasing encapsulated monomer followed by polymerization and sealing of the defected area (S.R. White, N.R. Sottos, P.H. Geubelle, J.S. Moore, M.R. Kessler, S.R. Sriram, E.N. Brown, S. Viswanathan, Nature. 2001, 409, 794).

However, even the sophisticated "self-healing" anti-corrosive coatings most recently developed are still improvable with respect to some properties such as the speed of healing a defect in response to a corrosion event and the efficiency of a controlled release of corrosion inhibitor.

Thus, an object of the present invention is to provide new, effective and broadly applicable means for providing active corrosion protection, in particular with self-healing ability, which radically improve the long-term performance of metallic substrates and avoid the drawbacks of the prior art.

Said problem is solved according to the present invention by providing a corrosion inhibiting coating according to present claims 1-11 which is controllable by electromagnetic irradiation and the methods for corrosion protection using said coating according to claims 12-15.

### Description of the invention

The corrosion inhibiting coating of the present invention comprises as a first layer a primer layer having incorporated therein corrosion inhibitor-loaded containers which are capable to release a corrosion inhibitor in response to electromagnetic irradiation and as a second layer a container-free protective top layer which, if intact, prevents the spontaneous opening of said containers in the primer layer induced by electromagnetic irradiation, and which coating is capable to release an inhibitor in response to electromagnetic irradiation if the protective top layer contains defective areas which enable direct exposition of the containers to the electromagnetic irradiation. The present invention takes advantage of a new mechanism based on the healing ability of anticorrosion agents remotely activated by remote electromagnetic irradiation. Remote light induced release demonstrates a facile method of controlling the properties of substrate coatings and improved performance. Upon electromagnetic irradiation such as light illumination the core or absorption centers locally disrupt the shells of inhibitor-loaded containers thus increasing the permeability of the container walls. The loaded inhibitor is then released, covering and healing the corrosion area. It is important to emphasize the fact that remote activation of the containers, preferably nanocontainers, makes the approach versatile. If a scratch or other defect has occurred and the surface becomes prone to corrosion, then illumination by light, e.g. laser light, would assure that these defects will be cured.

A main difference of the invention compared to previous coatings is the use of photocatalytically active porous materials of different types which act as initiators of the release of encapsulated inhibitor only when they are exposed to electromagnetic irradiation in damaged areas. Without the formation of a defect, photocatalytic containers are situated inside the coating covered by outer top-coat layer and do not react with the electromagnetic irradiation.

In the corrosion inhibiting coating of the invention, the containers preferably have a core of micro-, nano- or mesoporous photoactive particles and the inhibitor is present in the pores of said particles. Typically, the particles have a mean diameter in the range of from 5 nm to 50 µm, preferably from 20 nm to 5 µm, more preferred from 20 nm to 200 nm. Preferably, the porous particles have a mean pore size of from 1 nm to 200 nm and more preferred of from 2-50 nm (mesoporous particles).

Generally, the lower size of the pores is limited by the size of the molecule of corrosion inhibitor to be incorporated into the pores.

The terms "photocatalytic" and "photoactive" materials are used interchangeable herein and mean the capability to respond to electromagnetic irradiation by producing a "photohole" and "photoelectron" and further to interact with the container shell. Principally any such materials or "photocatalysts" may be used in the present invention. Materials with a wide band gap, typically > 2 electronvolt, are preferred because they provide a photogenerated photohole of higher energy for the opening of the container shell. In the case of UV irradiation, the photocatalytic process induces a conformational change in the polymer/- polyelectrolyte shell enclosing the core particles and/or a photocatalytic degradation or oxidation of the shell causing release of the entrapped inhibitor molecules.

Some non-limiting examples for suitable photoactive materials are TiO₂ in the anatase modification, ZnO, Zn(OH)₂, SnO₂, Wo₃, In₂O₃, Fe₂O₃, CdO, CdS, PbS, SrTiO₃, BaTiO₃, Nd₂O₅ BaSnO₃, KTaO₃, MOS₂, MOSe₂, WS2, WSe₂, HfS₂, GaP, GaAs, Si, and GdTe.

A preferred material is TiO₂ in the anatase modification. TiO₂ powders show a large BET specific surface area, e.g. reaching 529 m³/g (Example 1). The BET isotherm allows derivation of the pore size distribution. The pores are distributed in a narrow range, e.g. 1-10 nm, and the average pore size of material prepared in Example 1 is about ∼7 nm. Anatase particles are sensitive for UV and visible light.

In a specific embodiment of the present invention the porous particles have nanoparticles which are sensitive for IR/and/or visible light deposited on their surface. Preferably, the nanoparticles are photocatalytically deposited onto the container surface but other deposition methods known in the art may also used. Some non-limiting examples of suitable materials for such nanoparticles are noble metals and noble metal compounds, in particular Ag, Au, Au₂S etc.

The surface plasmon resonance of such noble metal nanoparticles is located in the IR/visible part of the spectrum. The nanoparticles serve as absorption centres for energy supplied as IR and/or visible light, preferably by a laser beam. These absorption centres cause a local heating that disrupts the local polymer shell and allows the loaded corrosion inhibitor to leave the interior of the containers. Important parameters that affect the interaction of laser light with the absorption centres are the size of the nanoparticles and their concentration. The concentration of metal nanoparticles plays an important role for two reasons: 1) when the distance between the two adjacent nanoparticles is of the order of their size, the thermal effects produced by adjacent nanoparticles add up; and 2) the interaction of nanoparticles located in close proximity to each other results in an increase of absorption at lower energies or higher wavelengths (causing the so-called red shift) compared to the surface plasmon resonance band of stand-alone nanoparticles (U. Kreibig, B.Schmitz, H. D. Breuer, Phys. Rev. B 1987, 36, 5027; T. Kahlau, M. Quinten, U. Kreibig, Appl. Phys. A 1996, 62, 19). Thus, the spatial arrangement of the nanoparticles is essential and control of their distribution and concentration is important.

The concentration of such nanoparticles is a parameter that can be easily controlled by the deposition conditions. In the case when the substrate is illuminated by a laser operating at the wavelength in close proximity of the surface plasmon resonance, a single absorbing nanoparticle will provide sufficient temperature rise for release of encapsulated inhibitors because the temperature rise on that nanoparticle can be controlled by the intensity of the laser beam. Indeed, closely located nanoparticles interact inducing near-IR absorption. Therefore, a higher concentration of aggregated nanoparticles is needed for near-IR responsive containers. The local temperature rise on nanoparticles can be rather high, over hundred degrees, and it can be controlled by the incident intensity and adjusted to just several degrees of temperature rise to induce release of encapsulated materials. Also, the size of nanoparticles should be comparable to the thickness of the shell surrounding the core.

Typically the size of the nanoparticles will be in a range of from 1 nm - to 50 nm, preferably from 2 nm to 20 nm and the concentration in a range of from 1 x 10¹⁰ atoms/cm² to 1 x 10²⁰ atoms/cm², preferably from 1 x 10¹² atoms/cm² to 1 x 10¹⁷ atoms/cm² For the silver coated titania particles of Example 2, the mean particle size of the nanoparticles is about 3-8 nm and the concentration is about 2 X 10¹⁵ atoms/cm² (according to Rutherford backscattering spectroscopy).

From the above, it is evident that at least two different mechanisms for opening the container shell may be used depending on the wave length of the electromagnetic irradiation applied, i.e. either a photocatalytic interaction between a photocatalytic core material and the shell in response to UV irradiation resulting in a conformational change and/or chemical degradation of the shell or a thermic effect based on the presence of absorption centers on the core particles. On order to obtain maximal versatility, it is preferred that the core material is able to respond to a broad range of electromagnetic radiation, including UV, visible light and IR. However, it is principally possible to use also particles which provide only one effect alone. A specific but not limiting example would be porous SiO₂ particles (which are not photoactive) having noble metal (e.g. silver) nanoparticles deposited thereon.

In a preferred embodiment of the invention, the inhibitor-loaded containers, preferably mesoporous particles, are enclosed by a polymer or polyelectrolyte shell which is capable to release said inhibitor in response to a photocatalytic effect or photothermic effect induced by electromagnetic irradiation of the core material as outlined above.

In a specific embodiment, the polymer or polyelectrolyte shell comprises one or more layers of a polymer or polyelectrolyte selected from the group consisting of poly(alkylene imine), e.g. poly(ethylene imine) (linear or branched), poly(styrene sulfonate), poly(allyl amine) (such as poly(allyl amine hydrosulfate), polyvinyl alcohol, poly(hydroxybutyric acid), polystyrene, poly(diallyldimethyl-ammonium chloride), poly(meth)acrylic acid, polyalkylene glcol, e.g. polyethylene glycol, poly(vinylpyridine), and biopolymers and polyamino acids, such as gelatin, agarose, cellulose, alginic acid, dextran, casein, polyarginine, polyglycin, polyglutamic acid, polyaspartic acid, and derivatives, copolymers or blends thereof.

More specifically, the polymer or polyelectrolyte shell comprises alternate layers of a positively charged polyelectrolyte, e.g. poly(ethylene imine) (PEI), and of a negatively charged polyelectrolyte, e.g. poly (styrene sulfonate) (PSS). In the Examples, a double bilayer of PEI and PSS was used and demonstrated to prevent the spontaneous leakage of incorporated inhibitor and being capable to be opened under UV irradiation (all types of containers based on titania) or IR and visible light (porous core particles modified with silver nanoparticles).

Other suitable polymers will be evident for the skilled artisan and may be obtained by, e.g., modifying the above polymers/polyelectrolytes or other polymers/polyelectrolytes as appropriate by introducing specific groups according to methods well known in the art. These groups may confer specific desirable properties to the polymer/polyelectrolyte, such as a defined hydrophilicity, hydrophobicity, charge, strength, sensibility for a specific trigger etc. The polymer or polyelectrolyte may also comprise copolymers or blends of suitable polymers/polyelectrolytes, such as copolymers or blends of the above mentioned polymers or polyelectrolytes.

The polymer or polyelectrolyte shell is preferably prepared by layer-by-layer assembly but may also be prepared by other suitable techniques of the prior art, such as surface polymerization (G. Sakellariou, M. Park, R. Advincula, J.W. Mays, N. Hadjichristidis, J. Polym. Sci. A 2006, 44, 769), surface deposition (A. Balakumar, A.B. Lysenko, C. Carcel, V.L. Malinovskii et. al. J. Org. Chem. 2004, 69, 1435), or self assembly techniques (J.L. Turner, M.L. Becker, X.X. Li, J.S.A. Taylor, K.L. Wooley Soft Matter, 2005, 1, 69).

The corrosion inhibitor to be stored in the containers of the corrosion inhibiting coating of the present invention may be any corrosion inhibitor known in the prior art which is suitable for the intended purpose. The choice of the inhibitor will depend, i.a., from the specific metallic products and structures to be protected, from the environmental conditions and operating conditions of the corrosion-protected products and other factors which will be evident for the skilled person in the art.

Preferably, in the corrosion inhibiting coating of the invention the inhibitor comprises an organic compound selected from the group consisting of an organic compound containing one or more amino groups, an azole-derivative compound, an organic compound containing one or carboxyl groups or salts of carboxylic acids, and an organic compound containing one or more pyridinium or pyrazine groups.

Some specific, non-limiting examples of suitable corrosion inhibitors are 8-hydroxychinolin, quinaldic acid, mercaptobenzotriazole, benzotriazole, tolyltriazole or salicylaldoxime.

The present corrosion inhibiting coating comprises at least a primer layer including inhibitor-loaded container and a container-free protective top layer. Preferably, one or both of said layers comprise a sol-gel-film, e.g., SiO₂/ZrO₂, CeO₂/TiO₂, ZrO₂/In₂O₃, ZrO₂/Al₂O₃ sol-gel systems. One preferred embodiment involves a hybrid SiO₂/ZrO₂ sol-gel film.

Hybrid SiOₓ:ZrOₓ-based container-free coatings were initially developed for corrosion protection of metals. Notwithstanding the fact that these films are highly corrosion protective, these films have one main disadvantage: the absence of corrosion healing and, consequently, termination of a corrosion process. It should be noted that along with the formation of protective coating, these films are subjected to crack appearance because of physical or chemical influences, for example small stone scratches or chloride ion attack, and, as a result, corrosion starts. The present invention provides a favorable means to heal the corrosion centers in a sol-gel film after their appearance.

A second aspect of the present invention is a method for providing controllable release of an corrosion inhibitor from said coating comprising irradiating the coating with electromagnetic radiation causing the containers to release said corrosion inhibitor, wherein the electromagnetic irradiation opens the container locally in parts of the coating damaged by a corrosion process while the other intact part of the coating remains closed.

In this method, the area of the opening may be determined by the irradiation focus and/or the release of loaded material may be regulated by the dose and intensity of irradiation.

Typically, the kind of irradiation is selected from UV, visible or IR irradiation and preferably the electromagnetic irradiation involves a laser irradiation. Generally, the wavelength for UV irradiation is in a range of from 200 nm to 400 nm, the wavelength for visible light irradiation in a range from 400 nm to 800 nm and the IR wavelength in a range from 800 nm to 3500 nm. The intensity of irradiation may vary over a broad range, i.a. depending on the specific coating and container materials and wavelength of the electromagnetic radiation used.

Suitable exposition times are typically in a range of from 1 sec to 1 hour for UV and from 10 sec to 12 hours for IR/Vis. irradiation.

### Brief Description of the Figures

**Figure 1****.** Schematic illustration of the procedure for inhibitor loading of mesoporous anatase TiO₂ containers
**Figure 2****.** AFM data for mesoporous anatase loaded SiOₓ/ZrOₓ film
**Figure 3****.** (A) - loading of the interior of titania containers with benzotriazole from 10 % aqueous solution under vacuum. Results of five repeated loading cycles are presented, (B) - release of benzotriazole from anatase TiO₂ nanocontainers at (1) pH=7.2; (2) pH=10.1 and (3) under UV-irradiation at neutral pH..
**Figure 4****.** Luminescent confocal images of polyelectrolyte containers with anatase titania core. The images are obtained (A) before and (B) after UV illumination. The particles in the figures correspond to the aggregates of nanocontainers.
**Figure 5**. Scanning vibrating electrode measurements (SVET) of the ionic currents above the surface of polyelectrolyte-mesoporous anatase based nanocontainers incorporated into SiOₓ:ZrOₓ hybrid film (aluminium alloy is a substrate) (A) at the beginning moment; (B) after 12 hours of corrosion; (C) after UV-irradiation and inhibitor release. Scale units: µA/cm², spatial resolution 150 µm. Solution: 0.1 M NaCl.
**Figure 6****.** Scanning vibrating electrode measurements (SVET) of SiOₓ:ZrOₓ hybrid film (aluminium alloy is a substrate) without protective containers (A) at the beginning moment; (B) after 12 hours of corrosion process; (C) after UV-irradiation. Scale units: µA cm⁻², spatial resolution 150 µm. Solution: 0.1 M NaCl.
**Figure 7****.** Images (bright field mode) mesoporous titania anatase modified by direct photodeposition of silver nanoparticles. The images are obtained before (a) and after (b) local illumination with an IR laser beam (white cross shows the position of the IR-laser beam). The particles in the figures correspond to aggregates of nanocontainers.
**Figure 8****.** Release of benzotriazole from anatase TiO₂/Ag nanocontainers with polyelectrolyte shell at (1) pH=7, (2) pH=10.1 and (3) under IR-laser irradiation
**Figure 9****.** Scanning vibrating electrode measurements (SVET) of the ionic currents above the surface of individual sol-gel at (A) beginning moment; (B) 42 hours of immersion; (C) 60 hours of immersion. Scale units: µA·cm⁻², spatial resolution: 150 µm. Solution: 0.1 M NaCl.
**Figure 10****.** (1) Scanning vibrating electrode measurements (SVET) of the ionic currents above the surface of polyelectrolyte/anatase/Ag nanocontainers incorporated into SiOₓ:ZrOₓ sol-gel film (A) after 24 hours immersion in 0.1M NaCl; (B) after local laser irradiation of the corrosion area. Scale units: µA·cm⁻², spatial resolution: 150 µm. (2) Scheme of the inhibitor release after local laser irradiation explaining the healing of the defect.

### EXAMPLE 1

In a specific embodiment of the present invention the release behaviour, anti-corrosive and self-healing effects of an inventive coating exposed to UV irradiation were investigated. The coating comprised mesoporous inhibitor-loaded anatase particles enclosed in a polyelectrolyte shell as containers embedded in an epoxy-functionalized ZrO₂/SiO₂ sol-gel film and deposited onto aluminum alloy AA2024 as a model metal substrate.

The first step was to obtain porous particles and to load them with the inhibitor benzotriazole. The mesoporous titania in anatase crystal modification was synthesized by oxidation of titanium carbide by 5 M nitric acid. The resultant particles were ca. 100 nm in size and have ∼6-7 nm pores. According to XRD analysis, the titania network was made of anatase crystallites with medium size of ca. 3 nm.

Benzotriazole (Bt) was then loaded inside the pores of the containers. Dispersed particles were mixed with a 10 mg/ml solution of benzotriazole. A vial containing the mixture was transferred to a vacuum jar and then repeatedly evacuated using a vacuum pump. Slight bubbling of the suspension indicates the air being removed from the container interior. After the bubbling was stopped, the vial was sealed for 30 min to reach equilibrium in benzotriazole distribution between the inner volume and the surrounding solution. The titania or silica suspension was centrifuged to remove excess of the dissolved benzotriazole and dried. The process was repeated four times to ensure the saturation of the inner titania cavity with precipitated benzotriazole.

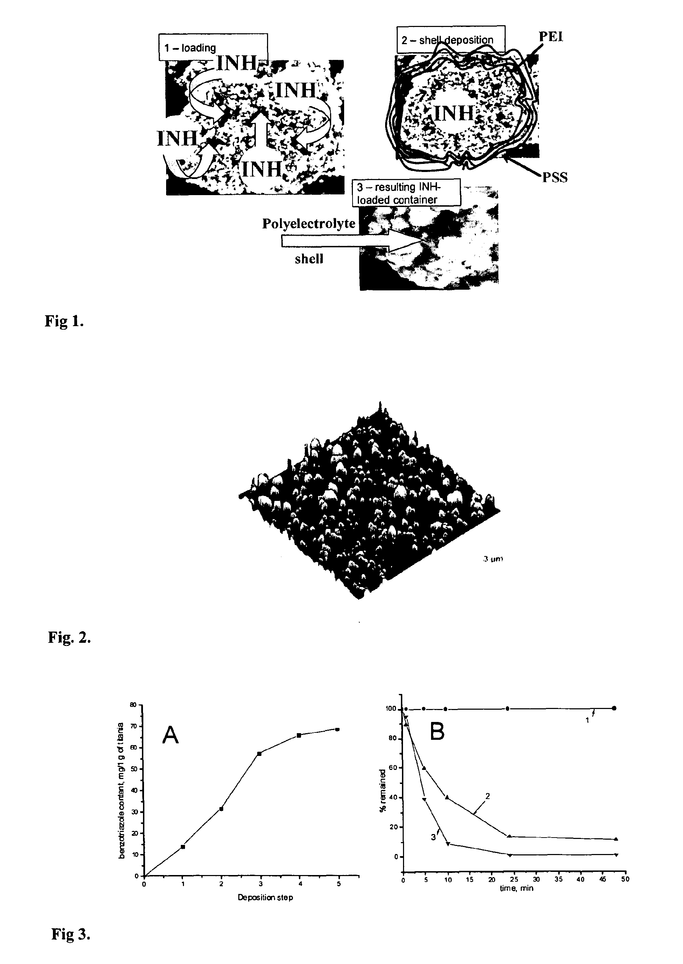

During the first two loading cycles the weight of the porous containers was gradually increased with a loading increment of appr. 30-35 mg of benzotriazole per 1 g of titania (Figure 3). The saturation level was achieved after the fifth loading step. The maximum benzotriazole content loaded into the titania interior is 73 mg/g of the porous material, which coincides with complete filling of the inner porous space of the TiO₂. Also to investigate the opening-closing behavior of such containers immobilized by hybrid SiOₓ:ZrOₓ-based film, the porous cores before polyelectrolyte shell deposition were loaded with a luminescent dye (Rhodamine 6G) acting as a probe for confocal microscopy studies.

To produce the polyelectrolyte shell, a deposition procedure involving PEI and PSS polyelectrolyte molecules was followed. The deposition of the positive PEI was performed on the first stage mixing 20 ml of SiO₂ or titania (15 or 12 wt %, respectively) colloidal solution with 3 ml of 2 mg/ml PEI solution for 15 min. Deposition of the negative PSS layer was carried out from 2 mg/ml PSS water solution. The same procedure was repeated twice. Washing of the resulting composite nanoparticles was performed by centrifugation after each adsorption step. The resulting nanocontainers have Bt-TiO₂/PEI/PSS/PEI/PSS structures. The benzotriazole content in the nanocontainers is equal to 69 mg/g of the initial TiO₂ particles (Figure 1).

Hybrid zirconia-organosilica films loaded with titania or silica containers were prepared using the controllable sol-gel route by mixing in 1:2 volume ratio the following sols: (i) zirconia sol obtained by hydrolyzing 70 wt % zirconium n-propoxide in propanol mixed with ethylacetoacetate (1:1 volume ratio) and (ii) organosiloxane sol synthesized by hydrolyzing 3-glycidoxypropyltrimethoxysilane in iso-propanol (in both cases acidified water pH=1 was used to initiate the hydrolysis). The mesoporous titania or silica was added into the resulting mixture in an amount of 3 mg/ml. The container loaded SiOₓ-ZrOₓ films were deposited onto metal (aluminum alloy AA 2024) substrates by a dip-coating procedure; the rate of substrate withdrawal was 18 cm/min. After the coating, the samples were cured at 130 °C for 1 hour. The top of the film was modified with additional layer of SiOₓ-ZrOₓ sol-gel to prevent the spontaneous interaction of the photocatalytic containers with external electromagnetic irradiation such as daylight before the beginning of the corrosion process.

The AFM image of a TiO₂-loaded sol-gel film prepared as outlined above (Figure 2) demonstrates an uniform distribution of the containers over the coating and shows that concentration of titania centers is even higher than obtainable with silica and ca. ∼10¹¹ containers per m². The uniform distribution and high concentration of containers per m² allows effective healing of the damaged corrosion area.

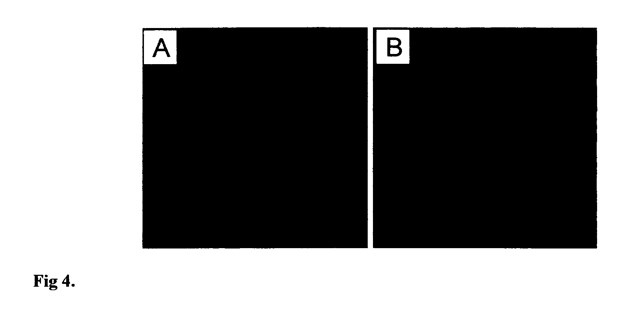

Model films with containers loaded with luminescent dye (Rhodamine 6G) and embedded into epoxy-functionalized SiOₓ:ZrOₓ sol-gel film were used for investigating the possibility of containers' opening under UV illumination with the use of confocal microscopy. It is seen from Figure 4 that luminescent dye stored in the containers exhibits a release upon UV illumination that results in spreading of luminescence over the entire exposed area (red areas in the image correspond to dye luminescence). The container opening upon exposure is not due to thermal shock effects since no release of the luminescent dye is observed for similar polyelectrolyte microcontainers with a core made of mesoporous silica and having deposited silver nanoparticles.

The release of all containers with encapsulated benzotriazole was studied in aqueous solution both under UV irradiation and shift in the pH of the media to alkaline region without UV irradiation. It is visible in Figure 3 that the containers exhibit spontaneous release of the benzotriazole under UV-irradiation. Moreover, containers with anatase titania core revealed an increase of the benzotriazole release under UV-irradiation twice faster in comparison with the pH stimulated corrosion test. Simultaneously, the highest release efficiency under pH change in the corrosion process was up to 65%, for titania-based mesoporous nanocontainers; however, if one uses the UV-irradiation the release could be increased up to 86%. Thus for the coatings where very fast release is necessary, the use of UV-irradiation is strongly preferable. Consequently, using UV-sensitive titania based containers allows one to achieve the effect of healing of the damaged corrosion area incredibly fast.

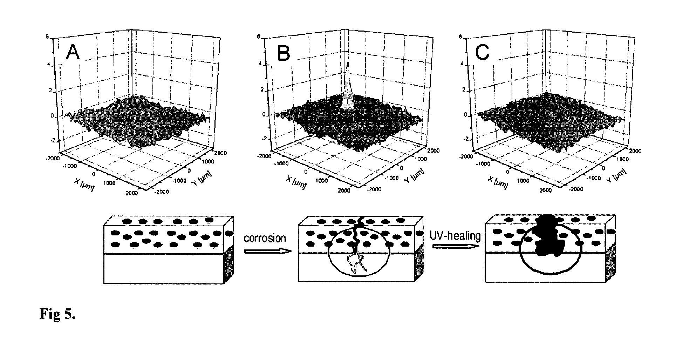

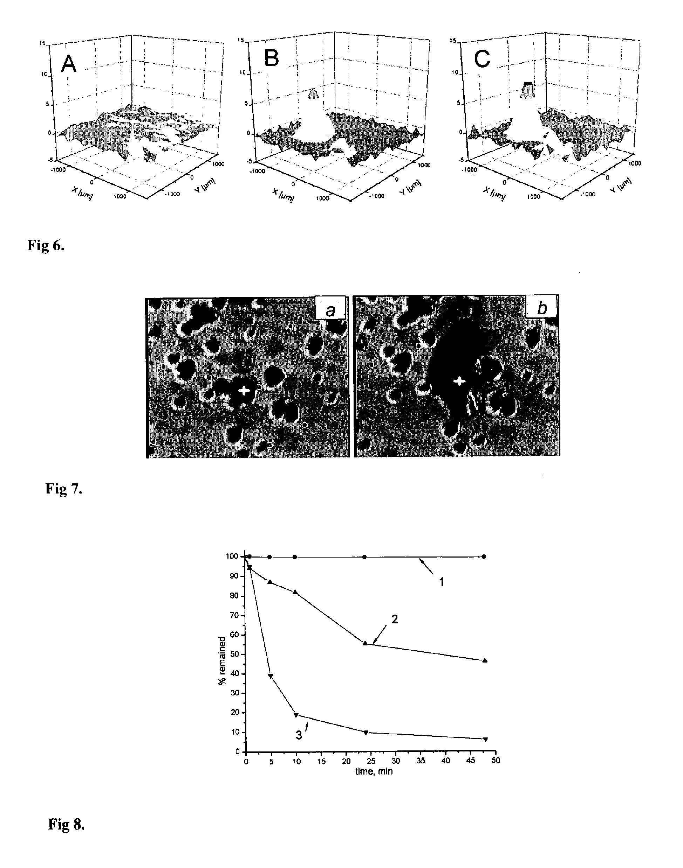

The opening of the polyelectrolyte shell is induced by UV-irradiation and release of the inhibitor occurs that results in the suppression of the corrosion process as illustrated by Scanning Vibration Electron Technique (SVET) (Figure 5). It is visible from the scheme and SVET measurements (Figure 5) that during the corrosion process the corrosion center appears and after local UV irradiation the total suppression of on-going corrosion is achieved. After several hours in the solution of sodium chloride the anodic activity was observed on the SVET image (peak in Figure 5), and after five minutes irradiation the corrosion centre disappears. It is worth noting that the same self-healing effect resulting from pH stimulated opening of the containers takes several hours. This fast healing effect is the most important characteristic of the new type of anticorrosion coatings demonstrated in the present work. No such UV stimulated fast healing was observed in the case of epoxy-functionalized SiOₓ:ZrOₓ sol-gel films in the absence of protective containers. It is seen from Figure 6 that the anodic activity once appearing has a tendency towards anodic activity increasing with time and UV irradiation. Hence it could not provide self-healing of the bare SiOₓ-ZrOₓ sol-gel coating.

**Materials.** Aluminium alloy AA2024 was supplied by Aldrich, polyethyleneimine (PEI, MW∼600000-1000000), poly(sodium 4-styrenesulfonate) (PSS, MW∼70000), HCl, NaCl, zirconium n-propoxide (TPOZ), 3-glycidoxypropyltrimethoxysilane (GPTMS), propanol, ethylacetoacetate, EtOH, tetraethoxysilane (TEOS), cetyltrimethylammonium bromide (CTAB), HNO₃ TiC, AgNO₃ were purchased from Sigma-Aldrich and used without further purification. The water was purified in a three-stage Millipore Milli-Q Plus 185 purification system and had a resistivity higher than 18 MΩ/cm.

**Characterization.** The morphology of anatase titania was investigated by transmission electron microscopy (TEM) using a LEO 906 E transmission electron microscope (Carl Zeiss, Germany) with accelerating voltage of 120 kV. The specific surface area of the container cores silica and titania was obtained by N₂ adsorption fitted with BET isotherms (Micrometrics, ASAP 2010). Scanning electron microscopy (SEM, LEO-1420, Carl Zeiss, Germany) and atomic force microscopy (AFM, Nanoscope III Multimode AFM, Digital Instruments Inc., USA, operating in Tapping mode^{™}) were used for characterization of the obtained particles and of the surface of SiOₓ-ZrOₓ film loaded with containers. AFM-tips (PPP-NCH-W) having a resonance frequency of 302-354 kHz and a stiffness of 25-42 N/m were purchased from Nanosensors (Germany). Absorption spectra in the ultraviolet and visible (UV/VIS) range were recorded to determine benzotriazole concentration during loading and release by means of an Agilent 8453 spectrophotometer (Agilent Technologies, USA). Confocal fluorescence measurements were conducted on a Leica TCS SP inverted confocal microscope system (Leica, Germany) equipped with a 100x and 40x oil immersion objective having a numerical aperture of 1.4 and 1.25, respectively.

### EXAMPLE 2

The effects of IR and visible light irradiation onto an inventive coating comprising anatase-based core particles with deposited silver nanoparticles were studied using laser irradiation and TiO₂ particles prepared as in example 1. To make the containers sensitive to the laser irradiation, silver nanoparticles were formed on the container core. In the case of titania based containers silver nanoparticles were directly photodeposited onto the titania core before the container loading with corrosion inhibitor and polyelectrolyte shell formation. By changing the deposition conditions (exposure dose, light intensity) the metal loading can be effectively controlled and the dispersity of the resultant metal nanophase can be readily varied in wide ranges (E.V. Skorb, E.A. Ustinovich, A.I. Kulak, D.V. Sviridov, J. Photochem. Photobiol. A:Chem. 2008, 193, 97). Silver nanoparticles were deposited onto the TiO₂ core by illumination of the TiO₂ surface with UV light (10s) in aqueous solution of 10⁻⁵ M AgNO₃.

In the present studies silver nanoparticles directly deposited in a photocatalytic way to the surface of mesoporous container were used for the remote activation of containers. These nanoparticles have an excellent plasmon resonance absorption. The diameter of most of the silver nanoparticles was ∼8 nm. Further studies were conducted with respect to the release of the loaded corrosion inhibitor from the containers, the influence on the anticorrosion protection capability of the coatings and the ability to terminate corrosion processes using IR-irradiation.

As was mentioned earlier, upon exposure to laser light the containers ruptured releasing their contents. Images were recorded in transmission mode before and after illumination (Figure 7). It is apparent from (Figure 7) that the stored containers can be opened in a light-addressable mode and the release of the luminescent dye from the capsule can be obtained. The rupture of the containers demonstrates that a laser-nanoparticle interaction through a thermal process is responsible for container activation. Concentration of nanoparticles is a parameter that can be easily controlled by the deposition conditions. In the case when the substrate is illuminated by a laser operating at the wavelength in close proximity of the surface plasmon resonance, a single absorbing nanoparticle will provide sufficient temperature rise for release of encapsulated inhibitors because the temperature rise on that nanoparticle can be controlled by the intensity of the laser beam. Indeed, closely located nanoparticles interact inducing near-IR absorption. Therefore, a higher concentration of aggregated nanoparticles is needed for near-IR responsive containers. The local temperature rise on nanoparticles can be rather high, over hundred degrees, and it can be controlled by the incident intensity and adjusted to just several degrees of temperature rise to induce release of encapsulated materials. Also, the size of nanoparticles needs to be chosen comparable to the thickness of the polyelectrolyte multilayers. In our case of silver nanoparticles the diameter was ∼ 8 nm, which is comparable to several layers of polyelectrolytes around the corrosion inhibitor.

The release characteristics of containers with successfully encapsulated benzotriazole were studied in aqueous neutral solutions under laser irradiation and, for comparison, under neutral or alkaline pH adjusted by addition of NaOH. As seen in Figure 8, nanocontainers exhibit release of benzotriazole under laser irradiation. If one compares with pH stimulated release of corrosion inhibitor, the laser stimulated release occurs up to three times quicker. For coatings where the immediate release of the inhibitor is necessary, the use of containers which could be immediately opened by laser irradiation is a very important advantage.

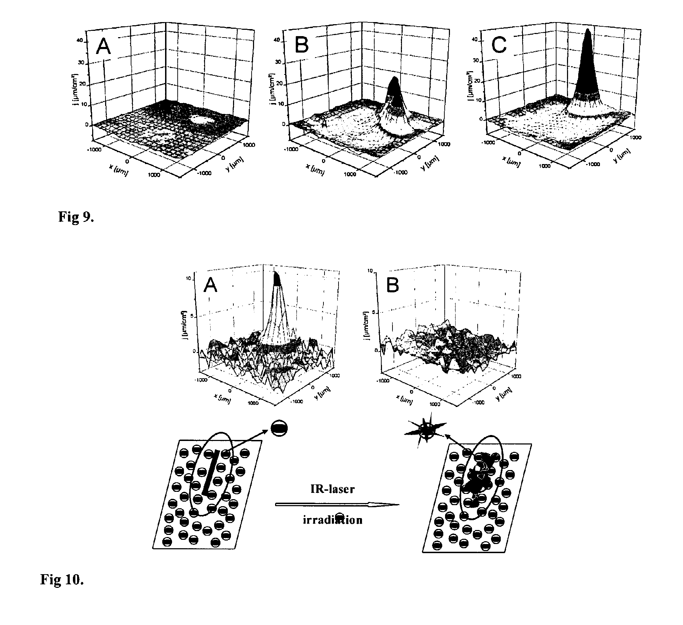

SVET allows investigation of the termination of the corrosion process under IR-laser irradiation. It was applied to map the current density distribution on both individual sol-gel and sol-gel loaded with containers. Figure 9 shows the current density maps for sol-gel coated aluminium alloy during the process of corrosion upon immersion in 0.1 M NaCl. A significant current flow was observed after 42 hours of scanning time (Figure 9, A) on the surface of the undoped sol-gel film. The anodic activity increases in time, which is seen from the higher corrosion activity in Figure 9, B in comparison with Figure 9, C. A regulation of the corrosion process could possibly occur by means of containers with corrosion inhibitor incorporated into the sol-gel film. The Figure 10, A shows the map recorded after 42 hours of immersion of the sol-gel loaded with IR-laser sensitive containers. In these experiments, the idea was to study the influence of the opening of the containers under laser irradiation and, consequently, the corrosion inhibitor release for the corrosion process termination. The result is shown in Figure 10, B - immediately after irradiation the corrosion disappears. Thus, to achieve fast healing of the corrosion it is preferable to use IR-laser stimulated treatment of the corrosion centres. The scheme (Figure 10) shows how the healing of corrosion defect works: when the cracks appear and corrosion begins, one can achieve the release of corrosion inhibitor and defect healing using laser irradiation, moreover these films are characterized by high anticorrosion ability during aging.

**Opening of the polyelectrolyte containers**. Opening of the anatase/silver containers was performed in two modes. First, using a homemade laser setup in which a collimated pulsed laser (time duration 700 ps, and power 3 uJ, 820 nm) was focused onto the sample through a microscope objective, 100-magnification. Illumination for transmission mode using a 150 W light source, and the images were recorded by a charge-coupled device camera connected to a computer. In the second mode, an unfocussed CW frequency doubled Nd:YAG laser (operating at 532 nm) with an average incident power up to 150 mW exposed the sample in direct illumination for ∼ 30 seconds.

In the case of a pulsed laser beam the release occurs after exposure to a single pulse, although scanning of the spot can be used to increase the illumination area. In the case of continuous laser operation, the release was triggered on an area of ∼ 1 mm² during a single exposure in the second interval time. Reaching larger areas is possible by scanning the affected area with the laser. The laser intensity was measured by a Newport-183°C power meter.

**Characterization.** The corrosion healing efficiency of the coatings after IR laser irradiation was investigated by the scanning vibrating electrode technique (SVET, from Applicable Electronics, USA). The diameter of the Pt blackened electrode tip is 20 µm, the peak-to-peak amplitude is 60 µm, and the vibration frequency is 655 Hz. An area of 4.5x4.5 mm² was scanned with a step width of 150 µm. The probe was 300 µm above the sample surface. The scans had a duration of ca. 15 min each and were repeated every ½ hour. The SVET method yields current density maps over the selected surface of the sample thus allowing the monitoring of local cathodic and anodic activity in the corrosion zones.

## Claims

1. A corrosion inhibiting coating comprising as a first layer a primer layer having incorporated therein corrosion inhibitor-loaded containers which are capable to release a corrosion inhibitor in response to electromagnetic irradiation and as a second layer a container-free protective top layer which, if intact, prevents the spontaneous opening of said containers in the primer layer induced by electromagnetic irradiation, and which coating is capable to release an inhibitor in response to electromagnetic irradiation if the protective top layer contains defective areas which enable direct exposition of the containers to the electromagnetic irradiation.

2. The corrosion inhibiting coating according to claim 1, in which the electromagnetic irradiation is selected from the group of UV, visible light and IR irradiation.

3. The corrosion inhibiting coating according to claim 1 or 2, in which the containers have a core of micro-, nano- or mesoporous photo-active particles and the inhibitor is present in the pores of said particles.

4. The corrosion inhibiting coating according to claim 3, in which the porous particles are selected from TiO₂ in the anatase modification, ZnO₂, Zn(OH)₂, SnO₂, Wo₃, In₂O₃, Fe₂O₃, CdO, CdS, PbS, SrTiO₃, BaTiO₃, Nd₂O₅, BaSnO₃, KTaO₃, MoS₂, MoSe₂, WS2, WSe₂, HfS₂, GaP, GaAs, Si, GdTe and other photocatalysts.

5. The corrosion inhibiting coating according to any one of claims 3-4, in which the porous particles have nanoparticles sensitive for IR- and/or visible light such as Ag, Au, or Au₂S deposited onto their surface.

6. The corrosion inhibiting coating according to any one of claims 1-5, in which the containers comprise a polymer or polyelectrolyte shell enclosing the core particles.

7. The corrosion inhibiting coating according to claim 6, in which the polymer or polyelectrolyte shell comprises one or more layers of a polymer or polyelectrolyte selected from the group consisting of poly(alkylene imine), e.g. poly(ethylene imine), poly(styrene sulfonate), poly(allyl amine), polyvinyl alcohol, poly(hydroxybutyric acid), polystyrene, poly(diallyldimethylammonium chloride), poly(meth)-acrylic acid, polyalkylene glcol, e.g. polyethylene glycol, poly(vinylpyridine), and biopolymers and polyamino acids, such as gelatin, agarose, cellulose, alginic acid, dextran, casein, polyarginine, polyglycin, polyglutamic acid, polyaspartic acid, and derivatives, copolymers or blends thereof.

8. The corrosion inhibiting coating according to claim 7, in which the polymer or polyelectrolyte shell comprises alternate layers of a positively charged polyelectrolyte, e.g. poly(ethylene imine), and of a negatively charged polyelectrolyte, e.g. poly (styrene sulfonate).

9. The corrosion inhibiting coating according to any one of claims 1-8, in which the inhibitor comprises an organic compound selected from the group consisting of an organic compound containing one or more amino groups, an azole-derivative compound, an organic compound containing one or carboxyl groups or salts of carboxylic acids, and an organic compound containing one or more pyridinium or pyrazine groups.

10. The corrosion inhibiting coating according to claim 9, in which the inhibitor is 8-hydroxychinolin, quinaldic acid, mercaptobenzotriazole, benzotriazole, tolyltriazole or salicylaldoxime or their derivative.

11. The corrosion inhibiting coating according to any one of claims 1-10, in which the primer layer and/or the protective top layer comprise a sol-gel-film, in particular a hybrid SiO₂-ZrO₂ film.

12. A method for providing controllable release of an corrosion inhibitor from the coating according to any one of claims 1-11 comprising irradiating the coating with electromagnetic irradiation causing the containers to release said corrosion inhibitor, wherein the electromagnetic irradiation opens the container locally in parts of the coating damaged by a corrosion process while the other intact part of the coating remains closed.

13. The method according to claim 12, in which the area of the opening is determined by the irradiation focus and/or in which the release of loaded material is regulated by the dose and intensity of irradiation.

14. The method according to claim 12 or 13, in which the irradiation is selected from UV, visible or IR irradiation.

15. The method according to claim 14, in which the electromagnetic irradiation involves a laser irradiation.
